**Europäisches Patentamt**

**European Patent Office**

**Office européen des brevets**

(19)

(11) Veröffentlichungsnummer: **0 385 300 B1**

(12)

# EUROPÄISCHE PATENTSCHRIFT

(45) Veröffentlichungstag der Patentschrift: **03.05.95**

(51) Int. Cl.6: **C08G 59/14**, C08C 19/30, C08L 63/00, C09D 5/44

(21) Anmeldenummer: **90103554.3**

(22) Anmeldetag: **23.02.90**

(54) **Durch Protonieren mit Säure wasserverdünnbare polymere Umsetzungsprodukte.**

(30) Priorität: **28.02.89 DE 3906144**

(43) Veröffentlichungstag der Anmeldung:
**05.09.90 Patentblatt 90/36**

(45) Bekanntmachung des Hinweises auf die Patenterteilung:
**03.05.95 Patentblatt 95/18**

(84) Benannte Vertragsstaaten:
**AT BE CH DE ES FR GB IT LI NL SE**

(56) Entgegenhaltungen:
**WO-A-87/02686**
**DE-A- 3 542 594**
**DE-A- 3 639 570**
**FR-A- 2 128 773**

(73) Patentinhaber: **BASF Lacke + Farben AG**
**Glasuritstrasse 1**
**D-48165 Münster-Hiltrup (DE)**

(72) Erfinder: **Schwerzel, Thomas, Dr.**
**Auf der Hoehe 42**
**D-6701 Meckenheim (DE)**
Erfinder: **Schupp, Hans, Dr.**
**Jean-Voelker-Strasse 40**
**D-6520 Worms 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die vorliegende Erfindung betrifft durch Protonieren mit Säure wasserverdünnbare polymere Umsetzungsprodukte aus

A. primären und/oder sekundären Aminogruppen enthaltenden Copolymerisaten auf Basis von Butadien und Acrylnitril
und
B. Epoxidharzen mit mittleren Molekulargewichten ($\overline{M}n$) von 140 - 10 000 und im Mittel 1,5 bis 3 Epoxidgruppen pro Molekül,

wobei die Menge von (A) so bemessen wird, daß pro Mol Epoxidgruppen der Komponente (B) mindestens 1,05 Mol primäre und/oder sekundäre Aminogruppen der Komponente (A) vorhanden sind.

Weiterhin betrifft die Erfindung Verfahren zur Herstellung der erfindungsgemäßen polymeren Umsetzungsprodukte sowie wäßrige Dispersionen, die diese Umsetzungsprodukte enthalten und die Verwendung der wäßrigen Dispersionen in Elektrotauchlackierbädern.

In der US-A 4 432 850 werden Reaktionsprodukte aus Polyepoxiden mit Polyoxyalkylenpolyaminen beschrieben, die nach Protonieren und Dispergieren in Wasser als Zusätze zu Standard-Elektrotauchlackierbädern verwendet werden können und eine Verbesserung des Verlaufs und der Flexibilität von Lackschichten bewirken sollen.

Die EP-A 253 404 bezieht sich ebenfalls auf wäßrige Dispersionen, die Standard-Elektrotauchlackierbädern zugesetzt werden können. Solche Dispersionen enthalten Umsetzungsprodukte aus Diglycidylethern von Polyolen oder aromatischen Diolen und einem mono- oder bifunktionellen Phenol, dessen restliche Epoxidgruppen ganz oder teilweise zu kationischen Gruppen umgesetzt werden. Auf diese Weise erhält man dicke Lackschichten mit verbesserten Korrosionsschutzeigenschaften.

In der DE-A 35 42 594 werden Bindemittel für die Elektrotauchlackierung beschrieben, zu deren Herstellung zunächst ein Carboxylgruppentragendes Butadien/Acrylnitril-Copolymerisat mit Diaminen umgesetzt wird, woran sich eine Umsetzung mit einem Epoxidharz anschließt, wobei das Epoxidharz in stöchiometrischem Überschuß, bezogen auf das Verhältnis Epoxid- zu Carboxygruppen, eingesetzt wird.

Weiterhin werden in der DE-A 36 39 570 Bindemittel für Elektrotauchlackierbäder beschrieben, die durch Umsetzung von aminterminierten Butadien-Acrylnitril-Copolymeren, mit teilweise desaktivierten Epoxidharzen erhalten werden.

Lackschichten, die durch kathodische Elektrotauchlackierung hergestellt werden, sollen gleichzeitig folgende wesentliche Eigenschaften aufweisen:
- guten Korrosionsschutz
- gute Elastizität.

Bisher bekannte Systeme weisen häufig nur eine von beiden Eigenschaften auf, d.h. Lacküberzüge mit einem guten Korrosionsschutzverhalten sind unelastisch, während hochelastische Überzüge schlechte Korrosionsschutzeigenschaften zeigen.

Aufgabe der vorliegenden Erfindung war es, Systeme zur Verfügung zu stellen, die beiden Kriterien gerecht werden.

Demgemäß wurden die eingangs definierten durch Protonieren wasserverdünnbaren polymeren umsetzungsprodukte gefunden, die durch Reaktion eines Butadien-Acrylnitril-Copolymeren mit einem Epoxidharz erhältlich sind und in Wasser Dispersionen ergeben, die als Zusätze für Standardelektrotauchlackierbäder verwendet werden können.

Als Komponente (A) eignen sich Butadien-Acrylnitril-Copolymere mit Acrylnitrilgehalten von 5 bis 45 Gew.-%, bevorzugt 10 - 30 Gew.-% und mit Butadiengehalten von 55 - 95 Gew.-% bevorzugt 70 - 90 Gew.-% die pro Molekül im Mittel 1,4 - 3,0 primäre und/oder sekundäre Aminogruppen, sowie gegebenenfalls tertiäre Aminogruppen, enthalten. Das mittlere Molekulargewicht ($\overline{M}n$) des Copolymeren beträgt vorteilhaft 500 - 15 000, bevorzugt 2000 - 8000.

Die aminogruppenhaltigen Copolymere lassen sich beispielsweise durch Umsetzung von Carboxylgruppen enthaltenden Butadien-Acrylnitril-Copoly meren mit Diaminen erhalten. Solche aminogruppenhaltigen Butadien-Acrylnitril-Copolymere sind größtenteils kommerziell erhältlich.

Weiterhin kann man Aminogruppen enthaltende Butadien-Acrylnitril-Copolymere durch partielle Hydrierung von Butadien-Acrylnitril-Copolymeren herstellen oder durch Addition von primären Aminen an epoxidgruppenhaltigen Butadien-Acrylnitril-Copolymere.

Als Komponente (B) werden Epoxidverbindungen eingesetzt, die ein Molekulargewicht (bei Polymeren $\overline{M}n$) von 140 bis 10 000 haben und im Mittel 1,5 bis 3 Epoxidgruppen, bevorzugt 2 Epoxidgruppen, pro Molekül enthalten.

EP 0 385 300 B1

Bevorzugte Epoxidverbindungen sind Glycidylether von aliphatischen Diolen wie Butandiol oder Hexandiol oder Glycidylether von im Mittel mindestens zwei phenolische Hydroxylgruppen enthaltenden Polyphenolen, die sich in üblicher Weise durch Veretherung mit einem Epihalohydrin in Gegenwart von Alkali herstellen lassen. Beispiele für geeignete Phenolverbindungen sind 2,2-Bis-(4-hydroxyphenyl)-propan (Bisphenol A), 4,4′-Dihydroxybenzophenon, 4,4′-Dihydroxyphenylsulfon, 1,1-Bis(4-hydroxyphenyl)-ethan, 1,1-Bis-(4-hydroxyphenyl)-isobutan, 2,2-Bis-(4-hydroxy-tert.-butyl-phenyl)-propan, Bis-(2-hydroxynaphthyl)-methan und 1,5-Dihydroxynaphthalin.

In manchen Fällen ist es wünschenswert, aromatische Epoxidharze mit höherem Molekulargewicht einzusetzen. Diese kann man erhalten, indem man die oben genannten Diglycidylether mit einem Polyphenol, beispielsweise 2,2-Bis-(4-hydroxyphenyl)-propan, reagieren läßt und dann die erhaltenen Produkte mit Epichlorhydrin unter Herstellung von Polyglycidylethern weiter umsetzt.

Außerdem kommen Diglycidylether von Polyolen, wie sie z.B. durch Polymerisation von Ethylenoxid, Propylenoxid, Tetrahydrofuran oder anderen cyclischen Ethern zugänglich sind, in Frage.

Die Menge der Komponenten (A) und (B) wird im allgemeinen so bemessen, daß pro Mol Epoxidgruppen der Komponente (B) 1,05 bis 20 mol, vorzugsweise 1,2 bis 4,0 mol, NH-Gruppen des Aminogruppen enthaltenden Butadien-Acrylnitril-Copolymers (A) eingesetzt werden.

Die Umsetzung wird in der Regel so durchgeführt, daß man das Butadien-Acrylnitril-Copolymer (A) mit dem Epoxidharz (B) in einem organischen Lösungsmittel oder Lösungsmittelgemisch, welches sich sowohl Aminogruppen als auch Epoxidgruppen gegenüber inert verhält, bei Reaktionstemperaturen von 20 - 150°C, vorzugsweise 50 - 110°C, umsetzt. Die Reaktionszeiten können bis zu 20 Stunden betragen.

Die so erhaltenen polymeren Umsetzungsprodukte haben Aminzahlen von 25-170 mg KOH/g Festsubstanz, vorzugsweise 40-100 mg KOH/g Festsubstanz.

Nach Beendigung der Epoxid-Aminreaktion kann man die Aminogruppen ganz oder teilweise mit Säure neutralisieren und das protonierte Harz mit Wasser dispergieren. Als Säuren kommen Phosphorsäure, bevorzugt jedoch organische Säuren, wie beispielsweise Ameisensäure, Essigsäure, Propionsäure oder Milchsäure in Betracht. Es ist auch möglich, das Harz in ein Wasser/Säure-Gemisch zu geben.

Anschließend können die organischen Lösungsmittel abdestilliert werden.

Die so erhaltenen Dispersionen können zu Standard-Elektrotauchlackierbädern zugesetzt werden. Im allgemeinen verwendet man Dispersionen mit einem Feststoffgehalt von 15 - 20 Gew.-%.

Solche Elektrotauchbäder enthalten als Grundharze basische Polymere, die als basische Gruppen primäre, sekundäre oder tertiäre Aminogruppen tragen. Es lassen sich auch Grundharze verwenden, die Phosphonium- oder Sulfoniumgruppen tragen. In aller Regel enthalten diese Grundharze zusätzlich noch funktionelle Grupen, z.B. Hydroxylgruppen oder ungesättigte Doppelbindungen.

Als derartige Grundharze, deren Molmasse vorzugsweise zwischen 2000 und 200 000 liegt, kommen Polymerisate, z.B. Aminoacrylat- und -methacrylatharze, Polyaddukte wie Aminopolyurethanharze und Polykondensate wie Aminoepoxidharze in Betracht.

Für Lackgrundierungen mit guten Korrosionsschutzeigenschaften werden als Grundharze bevorzugt Aminoepoxidharze eingesetzt. Aminoepoxidharze sind beispielsweise in der EP-A 134 983, der EP-A 165 556, der EP-A 167 029 oder in der DE-A 34 22 457 oder der DE-A 34 44 410 beschrieben.

Man erhält sie in an sich üblicher Weise durch Umsetzung von epoxidgruppenhaltigen Harzen mit gesättigten und/oder ungesättigten primären und/oder sekundären Aminen bzw. Aminoalkoholen. Als Epoxidharze kommen Verbindungen mit Mittel 1,5 bis 3, bevorzugt 2 Epoxidgruppen pro Molekül und mittleren Molekulargewichten von 300 bis 6000 in Betracht. Vor allem eignen sich Glycidylether von im Mittel 2 Hydroxygruppen im Molekül enthaltenden Polyphenolen, wobei als Phenolkomponenten vor allem 2,2-Bis-(4-hydroxyphenyl)-propan (Bisphenol A) in Betracht kommt.

Epoxidharze mit höherem Molekulargewicht erhält man durch Umsetzung der oben genannten Diglycidylether mit einem Polyphenol wie 2,2-Bis-(4-hydroxyphenyl)-propan und weitere Umsetzung der so erhaltenen Produkte mit Epichlorhydrin zu Polyglycidylethern.

Das Aminoepoxidharz kann auch mit gesättigten oder ungesättigten Polycarbonsäuren modifiziert sein, beispielsweise mit Adipinsäure, Fumarsäure oder dimerer Fettsäure.

Man kann auch Grundharze verwenden, die zusätzlich mit halbblockierten Isocyanaten umgesetzt worden sind und selbstvernetzende Eigenschaften haben. Solche Harze sind beispielsweise in der EP-A-273 247 oder der US 4 692 503 beschrieben.

Falls die Grundharze keine selbstvernetzenden Gruppen tragen, muß vor dem Dispergieren noch ein Vernetzer zugesetzt werden.

Geeignete Vernetzer für diese Grundharze sind z.B. Harnstoffkondensationsprodukte wie sie in der DE-A 33 11 514 beschrieben sind oder phenolische Mannich-Basen gemäß der DE-A 34 22 457. In der EP-A 134 983 werden als weitere mögliche Vernetzer auch geblockte Isocyanate oder Aminoplastharze wie

3

Harnstoff-Formaldehydharze, Melaminharze oder Benzoguanaminharze erwähnt.

Weiterhin können die Standard-Elektrotauchbäder noch Pigmentpasten und übliche Hilfsmittel enthalten. Pigmentpasten sind beispielsweise aus einem Reibharz und Pigmenten wie Titandioxid, Ruß oder Aluminiumsilikaten sowie Hilfs- und Dispergiermitteln erhältlich. Geeignete Reibharze sind beispielsweise in der EP-A-107 089 oder der EP-A-251 772 beschrieben.

Die Abscheidung der Lackfilme bei der kathodischen Elektrotauchlackierung erfolgt üblicherweise bei 20-35°C, vorzugsweise 26 bis 32°C, während 5-500 sec, vorzugsweise 60 bis 300 sec bei Abscheidespannungen von 50 - 500 V. Der zu beschichtende Gegenstand wird als Kathode geschaltet.

Anschließend können die Lackfilme bei Temperaturen im Bereich von 120-210°C, vorzugsweise 140 bis 180°C eingebrannt werden.

Auf diese Weise erhält man Lackschichten, die neben guten Korrosionsschutzeigenschaften auch eine hohe Elastizität besitzen.

Beispiele 1 bis 7

Herstellung der erfindungsgemäßen polymeren Umsetzungsprodukte

Allgemeine Vorschrift

In allen Beispielen wurde als Butadien-Acrylnitril-Komponente ein Copolymeres mit einem mittleren Molekulargewicht $\overline{M}_n$ von 3500-3800 verwendet, das durch Reaktion von Aminoethylpiperazin mit CarboxylgruppenterminiertenButadien-Acrylnitril-Copolymeren mit einem Acrylnitrilgehalt von 16 Gew.% erhältlich ist.

In den Beispielen 1 bis 5 wurde als Epoxidharz ein Polytetrahydrofurandiglycidylethermit einem Epoxidequivalentgewicht (EEW) von ungefähr 840 verwendet. In Beispiel 6 wurde ein Polypropylenoxiddiglycidylether (EEW ≈ 330) eingesetzt. Für Beispiel 7 wurde ein Bisphenol-A-diglycidylether (EEW ≈ 188) verwendet.

Das Butadien-Acrylnitril-Copolymerisat wurde in Toluol gelöst, mit dem Epoxidharz versetzt und mehrere Stunden (s. Tabelle I) bei 80°C gerührt bis der Epoxidwert praktisch gleich null war. Anschließend wurde das Reaktionsgemisch mit Ethylenglykolmonobutylether und Isobutanol verdünnt und auf 40°C abgekühlt. Dann wurde Eisessig zugegeben und innerhalb einer Stunde mit deionisiertem Wasser versetzt.

Danach wurde unter vermindertem Druck Teile der organischen Lösungsmittel und Wasser abdestilliert, und anschließend wurde mit deionisiertem Wasser der Feststoffgehalt eingestellt.

Die Einzelheiten dieser Versuche sind Tabelle I zu entnehmen.

Tabelle I

| Bsp. | 1 | 2 | 3 | 4 | 5 | 6 | 7 |
|---|---|---|---|---|---|---|---|
| Bu-AN-Copolymerisat [g] | 359.8 | 359.8 | 359.8 | 359.8 | 359.8 | 172.9 | 359.8 |
| Epoxidharz [g] | 23.1 | 46.3 | 52.9 | 61.7 | 70.7 | 27.4 | 9.2 |
| Toluol [g] | 164.1 | 174.0 | 176.9 | 180.6 | 184.5 | 85.8 | 158.1 |
| Ethylenglykolmono-butylether [g] | 62.9 | 68.4 | 68.2 | 62.4 | 59.4 | 41.4 | 86.0 |
| Isobutanol [g] | 97.1 | 116.0 | 119.0 | 112.0 | 111.0 | 73.2 | 125.3 |
| Essigsäure [g] | 5.9 | 6.4 | 6.3 | 5.8 | 5.5 | 3.8 | 5.5 |
| Wasser [ml] | 1463 | 1588 | 1588 | 1452 | 1452 | 960 | 2000 |
| Reaktionszeit [h] | 12 | 10 | 10 | 10 | 11 | 10 | 19 |
| Feststoffgehalt [Gew.%] | 17 | 19 | 17 | 18 | 18 | 18 | 17 |
| Aminzahl [mg KOH/g Festsubstanz] | 65.0 | 61.2 | 60.3 | 58.4 | 57.4 | 59.8 | 59.4 |

Elektrotauchbäder

a) Herstellung des Grundharzess

a1) Ein Gemisch aus 5800 g Hexamethylendiamin, 7250 g Dimerfettsäure und 1400 g Leinölfettsäure wurde langsam auf 195°C erhitzt, wobei das entstehende Wasser (540 g) abdestilliert wurde. Anschließend wurde das Gemisch auf 100°C abgekühlt und mit 5961 g Toluol auf einen Festgehalt von 70 Gew.% verdünnt. Das Produkt hatte eine Aminzahl von 197 mg KOH/g Substanz.

a2) In einem zweiten Rührgefäß wurden 10 Äquivalente eines Diglycidylethers auf Basis von Bisphenol A und Epichlorhydrin mit einem Äquivalentgewicht von 485 in einem Lösungsmittelgemisch aus 1039 g Toluol und 1039 g Isobutanol unter Erwärmen gelöst. Die so entstandene Lösung wurde auf 60°C gekühlt und mit 300,4 g Methylethanolamin und 128 g Isobutanol versetzt, wobei die Temperatur innerhalb von 5 min auf 78°C anstieg. Danach wurden 1850 g des nach a1) erhaltenen Kondensationsproduktes zugegeben und die Mischung 2 Stunden auf 80°C erwärmt.

b) Herstellung der Pigmentpaste

Zu 525,8 g des nach a) erhaltenen Bindemittels wurden 168,7 g Butylglykol, 600 g Wasser und 16,5 g Essigsäure gegeben. Dann wurden 800 g Titandioxid, 11 g Ruß und 50 g basisches Bleisilicat zugegeben und die Mischung auf einer Kugelmühle bis zu einer Korngröße kleiner 9 μm gemahlen. Anschließend wurde mit Wasser ein Feststoffgehalt von 47 Gew.% eingestellt.

c) Herstellung des Vernetzers

Eine Mischung aus 1,32 kg Toluol, 0,42 kg Trimethylolpropan und 0,72 kg Bisphenol A wurde bei 60°C so lange gerührt, bis eine homogene Lösung entstanden war. Diese Lösung wurde zu einem auf 60°C erwärmten Gemisch aus 3,45 kg Isophorondiisocyanat, 0,86 kg Toluol und 0,0034 kg Dibutylzinndilaurat gegeben. Das Gemisch wurde 2 h bei einer Temperatur von 60°C gehalten und dann mit 2,0 kg Dibutylamin versetzt, wobei die Zugabegeschwindigkeit so eingestellt wurde, daß die Temperatur des Reaktionsgemisches 80°C nicht überstieg. Anschließend wurden 1,11 kg Toluol zugegeben und noch 1 h bei 80°C gehalten.

d) Herstellung der Elektrotauchbäder

700 g des nach a) erhältlichen Bindemittels und 300 g des Vernetzers c) wurden unter Zusatz von 19 g Essigsäure mit soviel Wasser dispergiert, daß man eine Dispersion mit einem Feststoffgehalt von 31 Gew.% erhielt. Anschließend wurden organische Lösungsmittel als Azeotrop abdestilliert und danach mit Wasser ein Feststoffgehalt von 35 Gew.% eingestellt.

Die so erhaltene Dispersion wurde mit 775 g der nach b) erhältlichen Pigmentpaste und wechselnden Menge der erfindungsgemäßen Dispersion vermischt und mit Wasser auf ein Volumen von 5000 ml aufgefüllt.

Die Elektrotauchbäder wurden 168 Stunden bei 30°C gerührt. An kathodisch geschalteten zinkphosphatierten Prüftafeln aus Stahl wurden innerhalb von 120 Sekunden Lackfilme abgeschieden. Anschließend wurden diese Lackfilme 20 min bei 155°C eingebrannt.

Die Zusammensetzung der Bäder, die Abscheidebedingungen und die Prüfergebnisse sind in Tabelle II aufgelistet.

Tabelle II

| Bad | ET-Disp. [g] | erf.gem. [g] | Disp./Nr. | U [V] | SD [$\mu$m] | Erichsen-Ritzprüfung [mm] | RI [Nm] | 480 h SST [mm] | KWT [mm] |
|---|---|---|---|---|---|---|---|---|---|
| 1 | 1836 | – | – | 280 | 23 | 5.3 | < 2,3 | 1.0 | 1.6 |
| 2 | 1653 | 403 | 1 | 280 | 23 | 7.5 | 10,1 | 0.5 | 1.1 |
| 3 | 1653 | 372 | 2 | 290 | 25 | 6.4 | 10,1 | 0.7 | 1.3 |
| 4 | 1653 | 408 | 3 | 300 | 22 | 6.9 | 13,5 | 0.7 | 1.2 |
| 5 | 1791 | 94 | 4 | 260 | 23 | 6.9 | 2,3 | 0.9 | 1.6 |
| 6 | 1745 | 187 | 4 | 250 | 20 | 6.6 | 4,5 | 1.1 | 1.1 |
| 7 | 1653 | 374 | 4 | 280 | 25 | 8.5 | >18,1 | 1.1 | 0.9 |
| 8 | 1653 | 368 | 5 | 280 | 24 | 8.4 | >18,1 | 0.7 | 0.9 |
| 9 | 1653 | 376 | 6 | 260 | 26 | 7.5 | 11,3 | 1.2 | 1.2 |
| 10 | 1653 | 415 | 7 | 280 | 20 | 8.6 | 18,1 | 1.1 | 1.2 |

U:      Abscheidespannung

SD:     Schichtdicke

RI:     Reverse Impact, Schlagtiefung; Bestimmung mit einem mandrel impact tester der Fa. Gardner nach ASTM D 2794

480hSST: 480 Stunden Salzsprühtest auf blankem Blech, Unterwanderung in mm nach DIN 50 021

KWT:    10 Zyklen Klimawechseltest nach VDA 621-415, Unterwanderung in mm

EP 0 385 300 B1

**Patentansprüche**

**Patentansprüche für folgende Vertragsstaaten : AT, BE, CH, DE, FR, GB, IT, LI, NL, SE**

1. Durch Protonieren mit Säure wasserverdünnbare polymere Umsetzungsprodukte aus

   A. primären und/oder sekundären Aminogruppen enthaltenden Copolymerisaten auf Basis von Butadien und Acrylnitril
   und
   B. Epoxidverbindungen mit mittleren Molekulargewichten ($\overline{M}$n) von 140 bis 10.000 und im Mittel 1.5 bis 3 Epoxidgruppen pro Molekül,

   wobei die Menge von (A) so bemessen wird, daß pro Mol Epoxidgruppen der Komponente (B) mindestens 1.05 mol primäre und/oder sekundäre Aminogruppen der Komponente (A) vorhanden sind.

2. Umsetzungsprodukte nach Anspruch 1, in denen die Komponente (A) ein aminogruppenhaltiges Butadien-Acrylnitril-Copolymer ist, in das 5 bis 45 Gew.% Acrylnitril einpolymerisiert sind und das im Mittel 1.5 bis 3 primäre und/oder sekundäre Aminogruppen enthält.

3. Umsetzungsprodukte nach den Ansprüchen 1 oder 2, in denen als Epoxidverbindung (Komponente B) ein Glycidylether eines Di- oder Polyetherols verwendet wird.

4. Wäßrige Dispersionen, enthaltend Umsetzungsprodukte gemäß den Ansprüchen 1 bis 3, welche ganz oder teilweise mit Säure neutralisiert sind.

5. Verfahren zur Herstellung von polymeren Umsetzungsprodukten gemäß den Ansprüchen 1 bis 3, dadurch gekennzeichnet, daß man

   A. primäre und/oder sekundäre Aminogruppen enthaltende Copolymerisate auf Basis von Butadien und Acrylnitril mit
   B. Epoxidverbindungen mit mittleren Molekulargewichten ($\overline{M}$n) von 140 bis 10.000 und im Mittel 1.5 bis 3 Epoxidgruppen pro Molekül

   umsetzt, wobei die Menge an (A) so bemessen wird, daß pro Mol Epoxidgrupen der Komponente (B) mindestens 1.05 Mol primäre und/oder sekundäre Aminogruppen der Komponente (A) vorhanden sind.

6. Verwendung der Dispersionen gemäß Anspruch 4 als Zusatz zu Elektrotauchlackierbädern.

7. Elektrotauchlackierbäder, enthaltend die mit Säure wasserverdünnbaren polymeren Umsetzungsprodukte gemäß den Ansprüchen 1 bis 3.

8. Elektrotauchlackierbäder nach Anspruch 7, enthaltend zusätzlich Vernetzer und Pigmentpaste.

**Patentansprüche für folgenden Vertragsstaat: ES**

1. Verfahren zur Herstellung von durch Protonieren mit Säure wasserverdünnbaren polymeren Umsetzungsprodukten, dadurch gekennzeichnet, daß man

   A. primäre und/oder sekundäre Aminogruppen enthaltende Copolymerisate auf Basis von Butadien und Acrylnitril mit
   B. Epoxidverbindungen mit mittleren Molekulargewichten ($\overline{M}$n) von 140 bis 10.000 und im Mittel 1.5 bis 3 Epoxidgruppen pro Molekül

   umsetzt, wobei die Menge an (A) so bemessen wird, daß pro Mol Epoxidgrupen der Komponente (B) mindestens 1.05 Mol primäre und/oder sekundäre Aminogruppen der Komponente (A) vorhanden sind.

2. Verfahren zur Herstellung von Umsetzungsprodukten nach Anspruch 1, dadurch gekennzeichnet, daß man als Komponente (A) ein aminogruppenhaltiges Butadien-Acrylnitril-Copolymer verwendet, in das 5 bis 45 Gew.% Acrylnitril einpolymerisiert sind und das im Mittel 1.5 bis 3 primäre und/oder sekundäre Aminogruppen enthält.

3. Verfahren zur Herstellung von Umsetzungsprodukten nach den Ansprüchen 1 oder 2, dadurch gekennzeichnet, daß man als Epoxidverbindung (Komponente B) einen Glycidylether eines Di- oder Polyetherols verwendet.

4.  Verfahren zur Herstellung von wäßrigen Dispersionen, dadurch gekennzeichnet, daß man zu ihrer Herstellung Umsetzungsprodukte gemäß den Ansprüchen 1 bis 3 ganz oder teilweise mit Säure neutralisiert.

5.  Verfahren zur Herstellung von Elektrotauchlackierbädern, dadurch gekennzeichnet, daß man zu ihrer Herstellung mit Säure wasserverdünnbare polymere Umsetzungsprodukte gemäß den Ansprüchen 1 bis 3 verwendet.

6.  Verfahren zur Herstellung von Elektrotauchlackierbädern, dadurch gekennzeichnet, daß man wäßrige Dispersionen gemäß Anspruch 4 verwendet.

7.  Verfahren zur Herstellung von Elektrotauchlackierbädern nach Anspruch 5, dadurch gekennzeichnet, daß man zusätzlich Vernetzer und Pigmentpaste einsetzt.

## Claims
## Claims for the following Contracting States: AT, BE, CH, DE, FR, GB, IT, LI, NL, SE

1.  Polymeric reaction products that become water-thinnable on protonation with an acid and are formed from
    A. butadiene/acrylonitrile copolymers which contain primary and/or secondary amino groups, and
    B. epoxy compounds having average molecular weights ($\overline{M}n$) of 140 - 10,000 and containing on average 1.5 - 3 epoxy groups per molecule,
    the amount of (A) being such that 1.05 moles or more of primary and/or secondary amino groups of component (A) are present per mole of epoxy groups of component (B).

2.  Reaction products according to Claim 1, in which component (A) is an amino-containing butadiene/acrylonitrile copolymer which contains 5-45% by weight of acrylonitrile as copolymerized units and on average from 1.5 to 3 primary and/or secondary amino groups.

3.  Reaction products according to Claim 1 or 2, in which the epoxy compound (component B) is a glycidyl ether of a di- or polyetherol.

4.  Aqueous dispersions containing reaction products according to Claims 1 to 3, which have been wholly or partly neutralized with an acid.

5.  Process for preparing polymeric reaction products according to Claims 1 to 3, characterized in that
    A. butadiene/acrylonitrile copolymers which contain primary and/or secondary amino groups are reacted with
    B. epoxy compounds having average molecular weights ($\overline{M}n$) of from 140 to 10,000 and containing on average from 1.5 to 3 epoxy groups per molecule,
    the amount of (A) being such that 1.05 moles or more of primary and/or secondary amino groups of component (A) are present per mole of epoxy groups of component (B).

6.  The use of the dispersions according to Claim 4 as additives in electrocoating baths.

7.  Electrocoating baths containing the polymeric reaction products that are water-thinnable with an acid, according to Claims 1 to 3.

8.  Electrocoating baths according to Claim 7 containing in addition a crosslinking agent and a pigment paste.

## Claims for the following Contracting State : ES

1.  Process for preparing polymeric reaction products that become water-thinnable on protonation with an acid, characterized in that
    A. butadiene/acrylonitrile copolymers which contain primary and/or secondary amino groups are reacted with

9

B. epoxy compounds having average molecular weights ($\overline{Mn}$) of 140 - 10,000 and containing on average 1.5 - 3 epoxy groups per molecule,

the amount of (A) being such that 1.05 moles or more of primary and/or secondary amino groups of component (A) are present per mole of epoxy groups of component (B).

2. Process for preparing reaction products according to Claim 1, characterized in that component (A) is an amino-containing butadiene/acrylonitrile copolymer which contains 5-45% by weight of acrylonitrile as copolymerized units and on average from 1.5 to 3 primary and/or secondary amino groups.

3. Process for preparing reaction products according to Claim 1 or 2, characterized in that the epoxy compound (component B) is a glycidyl ether of a di- or polyetherol.

4. Process for preparing aqueous dispersions, characterized in that their preparation entails reaction products according to Claims 1 to 3 being wholly or partly neutralized with an acid.

5. Process for preparing electrocoating baths, characterized in that they are prepared using polymeric reaction products that are water-thinnable with an acid, according to Claims 1 to 3.

6. Process for preparing electrocoating baths, characterized in that aqueous dispersions according to Claim 4 are used.

7. Process for preparing electrocoating baths according to Claim 5, characterized in that a cross-linking agent and a pigment paste are additionally employed.

**Revendications**

**Revendications pour les Etats contractants suivants : AT, BE, CH, DE, FR, GB, IT, LI, NL, SE**

1. Produits de réaction polymères diluables à l'eau par protonation avec des acides, obtenus à partir

A. de copolymérisats à base de butadiène et d'acrylonitrile, contenant des groupements amino primaires et/ou secondaires

et

B. de composés époxydes ayant des poids moléculaires moyens ($\overline{Mn}$) de 140 à 10 000 et en moyenne de 1,5 à 3 groupements époxydes par molécule,

la quantité de (A) étant mesurée de sorte que soient présentes, par mole de groupements époxydes du composant (B), au moins 1,05 moles de groupements amino primaires et/ou secondaires du composant (A).

2. Produits de réaction selon la revendication 1, dans lesquels le composant (A) est un copolymère butadiène-acrylonitrile contenant des groupements amino, dans lequel de 5 à 45 % en poids d'acrylonitrile sont incorporés par polymérisation et qui contient en moyenne de 1,5 à 3 groupements amino primaires et/ou secondaires.

3. Produits de réaction selon les revendications 1 ou 2, dans lesquels on utilise en tant que composé époxyde (composant B) un éther glycidique d'un diétherol ou d'un polyétherol.

4. Dispersions aqueuses, contenant des produits de réaction selon les revendications 1 à 3, lesquelles sont entièrement ou partiellement neutralisées par des acides.

5. Procédé de préparation de produits de réaction polymères conformément aux revendications 1 à 3, caractérisé en ce que l'on fait réagir

A. des copolymérisats à base de butadiène et d'acrylonitrile, contenant des groupements amino primaires et/ou secondaires

et

B. des composés époxydes ayant des poids moléculaires moyens ($\overline{Mn}$) de 140 à 10 000 et en moyenne de 1,5 à 3 groupements époxydes par molécule,

la quantité de (A) étant mesurée de sorte que soient présentes, par mole de groupements époxydes du composant (B), au moins 1,05 moles de groupements amino primaires et/ou secondaires du composant (A).

6. Utilisation des dispersions conformément à la revendication 4 en tant qu'addition à des bains de vernissage par trempage électrophorétique.

7. Bains de vernissage par trempage électrophorétique, contenant les produits de réaction polymères diluables à l'eau par protonation avec des acides conformément aux revendications 1 à 3.

8. Bains de vernissage par trempage électrophorétique selon la revendication 7, contenant en sus des agents de réticulation et des pâtes pigmentaires.

**Revendications pour l'Etat contractant suivant : ES**

1. Procédé de préparation de produits de réaction polymères diluables à l'eau par protonation avec des acides, caractérisé en ce que l'on fait réagir
A. des copolymérisats à base de butadiène et d'acrylonitrile, contenant des groupements amino primaires et/ou secondaires
et
B. des composés époxydes ayant des poids moléculaires ($\overline{Mn}$) moyens de 140 à 10 000 et en moyenne de 1,5 à 3 groupements époxydes par molécule,
la quantité de (A) étant mesurée de sorte que soient présentes, par mole de groupements époxydes du composant (B), au moins 1,05 moles de groupements amino primaires et/ou secondaires du composant (A).

2. Procédé de préparation de produits de réaction selon la revendication 1, caractérisé en ce que l'on utilise en tant que composant (A) un copolymère butadiène-acrylonitrile contenant des groupements amino, dans lequel de 5 à 45 % en poids d'acrylonitrile sont incorporés par polymérisation et qui contient en moyenne de 1,5 à 3 groupements amino primaires et/ou secondaires.

3. Procédé de préparation de produits de réaction selon les revendications 1 ou 2, caractérisé en ce que l'on utilise en tant que composé époxyde (composant B) un éther glycidique d'un diétherol ou d'un polyétherol.

4. Procédé de préparation de dispersions aqueuses, caractérisé en ce que, en vue de leur préparation, des produits de réaction selon les revendications 1 à 3 sont entièrement ou partiellement neutralisés par des acides.

5. Procédé de préparation de bains de vernissage par trempage électrophorétique, caractérisé en ce que l'on utilise en vue de leur préparation des produits de réaction polymères diluables à l'eau par protonation avec des acides conformément aux revendications 1 à 3.

6. Procédé de préparation de bains de vernissage par trempage électrophorétique, caractérisé en ce que l'on utilise des dispersions aqueuses conformément à la revendication 4.

7. Procédé de préparation de bains de vernissage par trempage électrophorétique selon la revendication 5, caractérisé en ce que l'on met en oeuvre en sus des agents de réticulation et des pâtes pigmentaires.